# FASCICULE DE BREVET EUROPEEN

(11) **EP 3 491 394 B1**
(45) Date de publication et mention de la délivrance du brevet: **21.07.2021**
(21) Numéro de dépôt: 17748559.6
(22) Date de dépôt: 25.07.2017
(51) Int. Cl.: G01N 35/00, G01N 35/10, B01F 11/00, G01N 35/04

(54) **DISPOSITIF D'AGITATION ET DE PRELEVEMENT D'ECHANTILLONS DE LIQUIDES BIOLOGIQUES**
VORRICHTUNG ZUM SCHÜTTELN UND ENTNEHMEN VON BIOLOGISCHEN FLÜSSIGKEITEN
DEVICE FOR SHAKING AND SAMPLING BIOLOGICAL LIQUIDS

(30) Priorité: 28.07.2016 FR 1657321
(43) Date de publication de la demande: 05.06.2019
(73) Titulaire: Horiba ABX SAS, 34184 Montpellier Cedex 4 (FR)
(72) Inventeur: LARAVINE, Jean Emmanuel, 30600 Vestric et Candiac (FR); MUZELLIER, Charlène, 34380 Causse de la Selle (FR)
(74) Mandataire: Cabinet Netter
(86) Numéro de dépôt international: PCT/FR2017/052074
(87) Numéro de publication internationale: WO 2018/020147

(56) Documents cités:
- EP-A1- 0 549 573
- FR-A1- 2 859 285
- US-A1- 2010 064 826

## Description

L'invention concerne le domaine du prélèvement d'échantillons de liquides biologiques en particulier un fluide corporel, par exemple du sang.

Au cours des dernières décennies, les appareils d'analyse des produits sanguins ont connu de nombreuses évolutions. Ils couvrent désormais une gamme très large de performances, avec des machines à fonctionnalités et taille réduites, jusqu'à des appareils complexes reliés en réseau capables d'automatiser la quasi-totalité de la chaîne de traitement des échantillons.

Dans « l'entrée de gamme », la fiabilité et la maîtrise des coûts sont devenus des éléments cruciaux qui définissent la valeur des produits. Les documents US 2010/064826, EP 0 549 573 et FR 2 859 285 décrivent un dispositif selon le préambule de la revendication 1.

L'invention vient améliorer la situation. À cet effet, l'invention propose un dispositif d'agitation et de prélèvement d'échantillons de liquides biologiques propre à réaliser un prélèvement d'échantillon de liquides biologiques dans un tube, comprenant un agitateur propre à mélanger un portoir recevant un ou plusieurs tubes en réalisant une succession de basculements entre deux positions d'agitation, caractérisé en ce que l'agitateur est en outre agencé pour basculer au-delà de la position d'agitation la plus éloignée de la position d'introduction d'un portoir pour le décharger par déplacement gravitaire.

Ce dispositif est particulièrement avantageux car il offre un organe de prélèvement qui ne comprend qu'un unique actionneur qui déplace le tube pour réaliser le prélèvement. Ainsi, l'organe de prélèvement est fixe, ce qui augmente la fiabilité. En outre, le fait de n'avoir qu'un actionneur permet d'améliorer les coûts de revient, les temps de montage et les ajustements mécaniques nécessaires.

Dans diverses variantes, le dispositif peut présenter une ou plusieurs des caractéristiques suivantes :
- l'agitateur comprend un support ouvert, et le dispositif comprend en outre un couvercle agencé pour prévenir la sortie du portoir de l'agitateur lors de son agitation, et monté à rotation sur l'agitateur afin de libérer le portoir à travers l'ouverture du support lors d'un basculement au-delà de la position d'agitation éloignée de la position d'introduction du portoir,
- le couvercle comprend une portion venant en butée contre l'agitateur lorsque celui-ci atteint la position d'agitation la plus éloignée de la position d'introduction d'un portoir, et un ressort agencé pour se comprimer lorsque l'agitateur bascule au-delà de cette position, de sorte que le couvercle ne prévient pas la sortie du portoir,
- le dispositif présente en outre une pente agencée pour recevoir un portoir déchargé de l'agitateur et pour le guider vers une sortie du dispositif,
- la pente comprend une inclinaison orientée vers la sortie, de manière à guider un portoir déchargé hors du dispositif,
- l'agitateur réalise une succession de basculements entre deux positions d'agitation situées respectivement à 0° et à 120° par rapport à la position d'introduction du portoir dans l'agitateur,
- le dispositif comprend en outre des butées escamotables agencées pour empêcher un portoir d'interférer avec l'agitateur lorsque ce dernier reçoit déjà un portoir,
- le dispositif comprend en outre un perforateur fixe propre à percer un bouchon d'un tube à prélever, un aspirateur propre à réaliser un prélèvement dans un tube percé par le perforateur à travers ce dernier, et un poussoir comprenant un unique actionneur et agencé pour pousser un tube en regard du perforateur contre ce dernier et pour le rappeler, et
- le poussoir est mis en déplacement par une pièce reliée à une plaque coulissant sur deux tiges et mue par une came entraînée par un moteur, et un rappel comprenant une extrémité reliée à la pièce par un bloc relié à des ressorts, et agencé pour venir contre une butée afin de bloquer le déplacement de l'extrémité alors que le poussoir continue de progresser.

L'invention concerne également un procédé d'agitation et de prélèvement d'échantillons de liquides biologiques, comprenant les opérations suivantes :
- introduire un portoir dans un agitateur du dispositif,
- agiter le portoir recevant un ou plusieurs tubes en réalisant une succession de basculements entre deux positions d'agitation par l'agitateur,
- prélever au moins un échantillon de liquides biologiques dans un des tubes agités,
- basculer l'agitateur au-delà de la position d'agitation la plus éloignée de la position d'introduction d'un portoir, et
- décharger le portoir par déplacement gravitaire.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue en perspective d'un dispositif selon l'invention,
- la figure 2 représente une vue similaire à la figure 1, le boîtier ayant été retiré,
- la figure 3 représente une vue en perspective d'une partie de la figure 2,
- la figure 4 représente une vue en perspective partielle de la figure 3, selon la flèche IV,
- la figure 5 représente une vue en perspective partielle de la figure 3, selon la flèche V,
- les figures 6 à 8 représentent une vue de côté de la figure 3 à diverses étapes d'avancées d'un portoir de tubes,
- les figures 9 et 10 représentent une vue de côté de la figure 3 à diverses étapes de l'agitation d'un portoir de tubes,
- la figure 11 représente une vue selon la flèche XI de la figure 3,
- la figure 12 représente une vue de face de l'organe de prélèvement,
- les figures 13 à 15 représentent une vue rapprochée d'une partie de la figure 12 à diverses étapes de prélèvement d'un tube,
- les figures 16 à 18 représentent une vue de côté de la figure 3 à diverses étapes du déchargement d'un portoir de tubes, et
- la figure 19 représente une vue en perspective opposée de la figure 3, montrant des portoirs de tubes déchargés.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

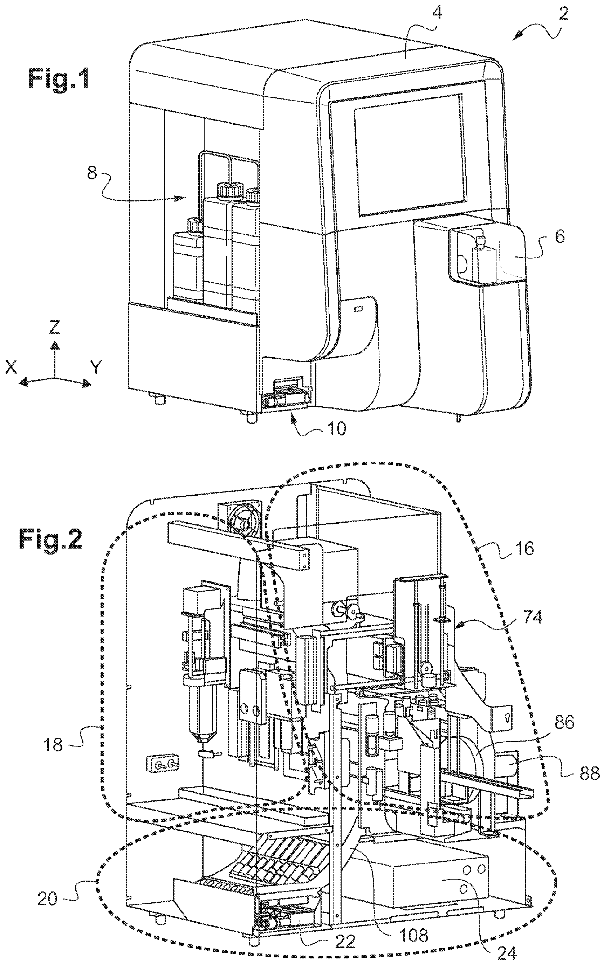

La figure 1 représente une vue en perspective d'un dispositif d'agitation et de prélèvement d'échantillons de liquides biologiques 2 selon l'invention.

Le dispositif 2 comprend un boîtier 4 de forme générale parallélépipédique, qui présente une trappe 6 pour introduire un tube dit « urgent » (ou un tube incompatible avec les portoirs, comme un tube pédiatrique), un emplacement 8 pour des réactifs, une sortie 10 pour récupérer des portoirs 12 analysés, et un emplacement (non visible sur la figure 1) pour introduire des portoirs 12 à analyser. Les portoirs 12 sont agencés pour recevoir des tubes 14 contenant les liquides biologiques comme des produits sanguins que le dispositif 2 doit échantillonner et analyser.

La figure 2 représente une vue similaire à la figure 1, dans laquelle le boîtier 4 a été retiré. Comme on peut le voir, l'intérieur du dispositif 2 comprend une partie supérieure séparée en une zone 16 d'agitation et de prélèvement des tubes 14 et une zone d'analyse 18, et une partie inférieure 20 séparée en une zone de sortie 22 et une zone d'alimentation électrique 24.

Le dispositif 2 est agencé pour fonctionner de manière séquentielle, c'est-à-dire qu'un portoir 12 (ou un tube urgent) est introduit, agité (les tubes urgents sont agités avant introduction), prélevé, et analysé et sorti du dispositif 2 avant que le prochain portoir 12 soit analysé, etc.

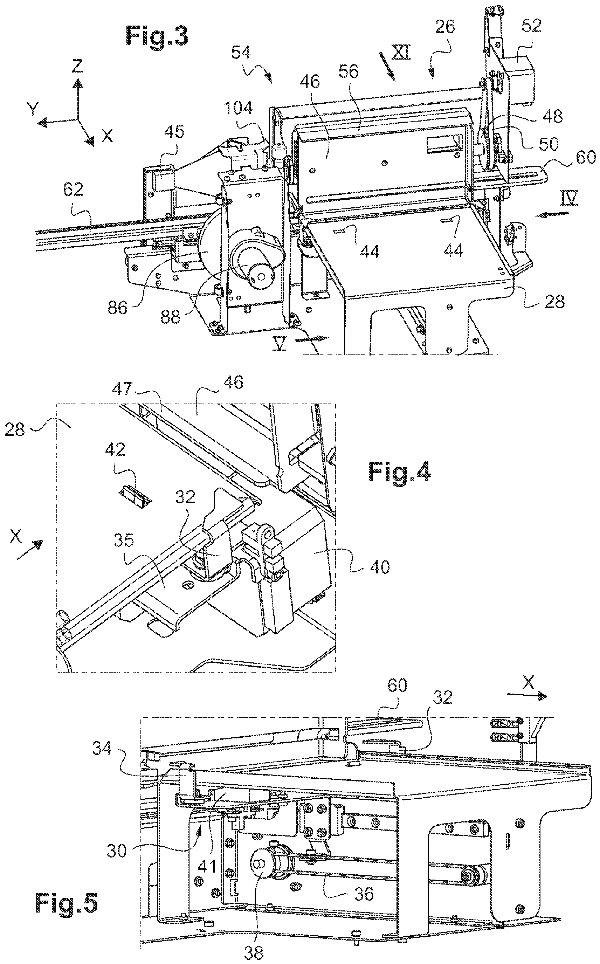

Pour cette raison, le dispositif 2 va être décrit selon cet ordre, en détaillant chaque partie concernée du dispositif 2. Ainsi les figures 3 à 8 décrivent la partie de la zone 16 servant à charger les portoirs 12 dans un agitateur 26. La partie du dispositif 2 dédiée au chargement comprend un plateau 28. Le plateau 28 reçoit les portoirs 12 par l'extrémité la plus éloignée de l'agitateur 26.

Les portoirs 12 peuvent être introduits à un quelconque emplacement du plateau 28 et sont poussés par un ensemble de chargement 30 qui comprend deux doigts 32 et 34 reliés par une plaque 35 sous le plateau 28 à une courroie 36 entraînée par un moteur 38. Les doigts 32 et 34 sont montés à rotation par rapport à la plaque 35, de sorte que, lorsque l'ensemble de chargement 30 recule pour charger le prochain portoir 12, les doigts 32 et 34 contournent celui-ci jusqu'à être derrière ce dernier. Du côté du doigt 32, l'ensemble de chargement comprend un détecteur 40 émettant un faisceau infrarouge permettant de détecter que le doigt 32 vient de passer derrière un portoir 12. Ainsi, l'ensemble de chargement 30 s'arrête.

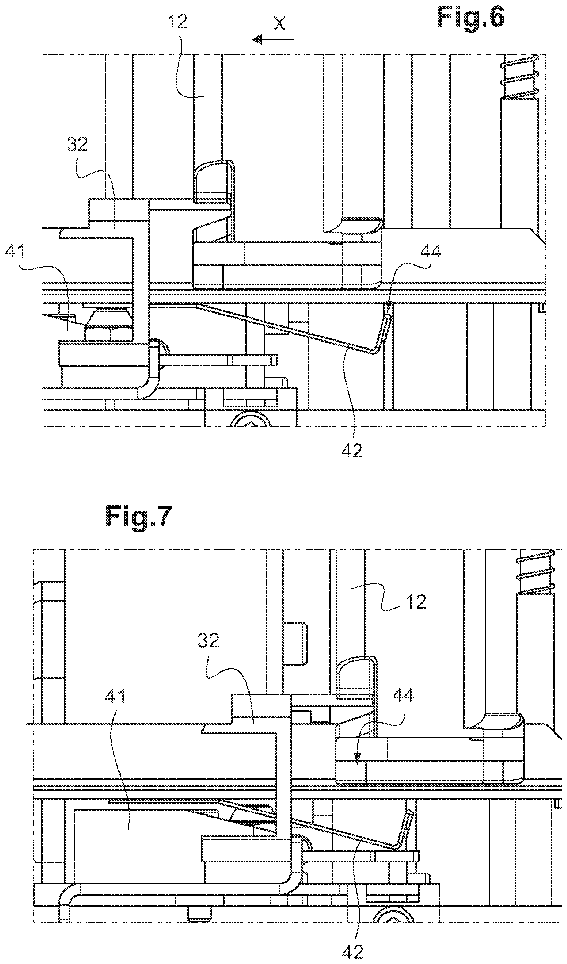

Lorsque l'ensemble de chargement 30 a détecté que les doigts 32 et 34 sont passés derrière un portoir 12, il inverse le sens de fonctionnement du moteur 38, de sorte que les doigts 32 et 34 viennent pousser le portoir 12 vers l'agitateur 26. La plaque 35 reçoit également deux rampes plastiques 41 en forme de parallélépipède dont l'extrémité opposée à la plaque 35 et la plus proche de l'agitateur 26 est biseautée. Cette partie biseautée est telle que, lorsque l'ensemble de chargement 30 pousse un portoir 12 vers l'agitateur 26, elle vient progressivement faire remonter deux butées 42 en forme de L (voir figures 6 à 8) à travers des trous 44 du plateau 28. Ainsi, en fin de course de l'ensemble de chargement 30, les butées 42 empêchent les autres portoirs 12 de venir en contact avec l'agitateur 26.

L'agitateur 26 comprend un support 46 sensiblement en forme de L. Lorsque le portoir 12 est introduit, il est vertical, c'est-à-dire que les tubes 14 s'expriment selon la direction Z, les bouchons étant situés vers le haut. Le support 46 est légèrement plus bas que le plateau 28 et comprend un pli 47 formant languette (visible sur la figure 4) qui permet de retenir le portoir 12 une fois celui-ci reçu dans l'agitateur 26. La languette 47 ne gêne pas l'introduction du fait du léger décalage du support 46 par rapport au plateau 28.

Le système 2 présente avantageusement un lecteur de code à barres 45 placé au poste de prélèvement permettant une identification positive (c'est-à-dire sans déplacement du tube 14 entre l'identification et le prélèvement) du type de portoir 12 (code à barre sur le portoir 12) ainsi que la détection de la présence d'un tube 14 et si oui de son identification.

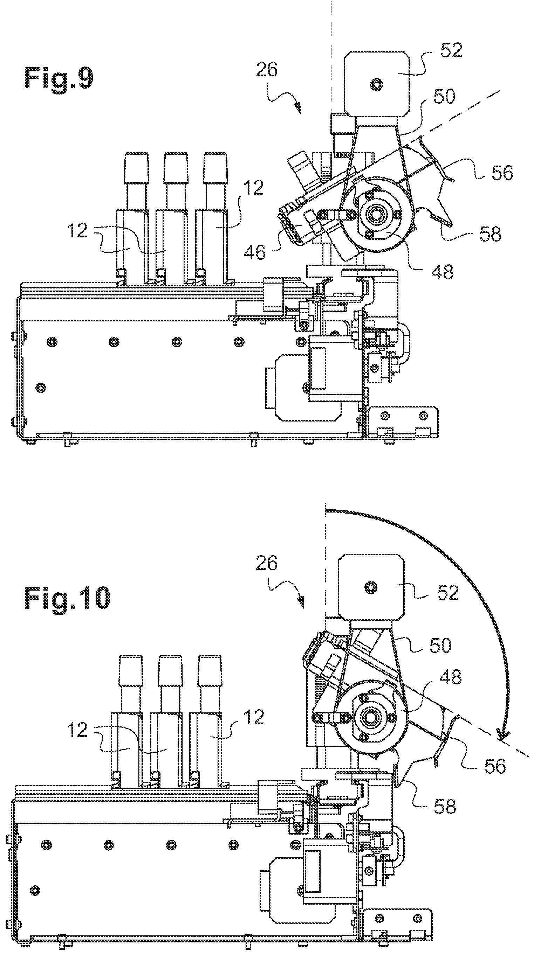

Ensuite, l'agitateur 26 exerce plusieurs basculements du portoir 12 entre deux positions :
- une première position dans laquelle les tubes 14 forment un angle d'environ 0° avec la position d'introduction du portoir 12 (en pointillés sur la figure 9), et
- une deuxième position dans laquelle les tubes 14 forment un angle d'environ 120° avec la position d'introduction du portoir 12 (figure 10).

En variante, selon la manière dont les portoirs 12 sont introduits dans l'agitateur 26, les angles pourraient être différents et varier entre -180° et 180° avec la position d'introduction du portoir 12.

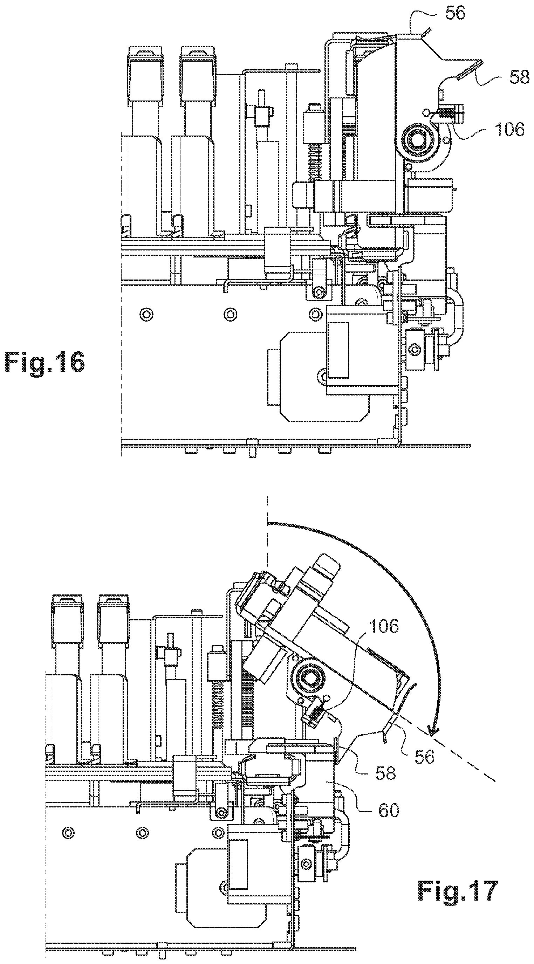

Le basculement entre la première et la deuxième position est réalisé en appliquant une rotation à une roue dentée 48 engagée avec une courroie 50 entraînée par un moteur 52. Afin d'éviter que le portoir 12 tombe lorsque le support 46 est incliné, un couvercle 54 est monté sur l'agitateur 26. Le couvercle 54 comprend deux parties 56 et 58, la partie 56 servant à maintenir le portoir 12, tandis que le rôle de la partie 58 sera explicité avec les figures 16 à 19.

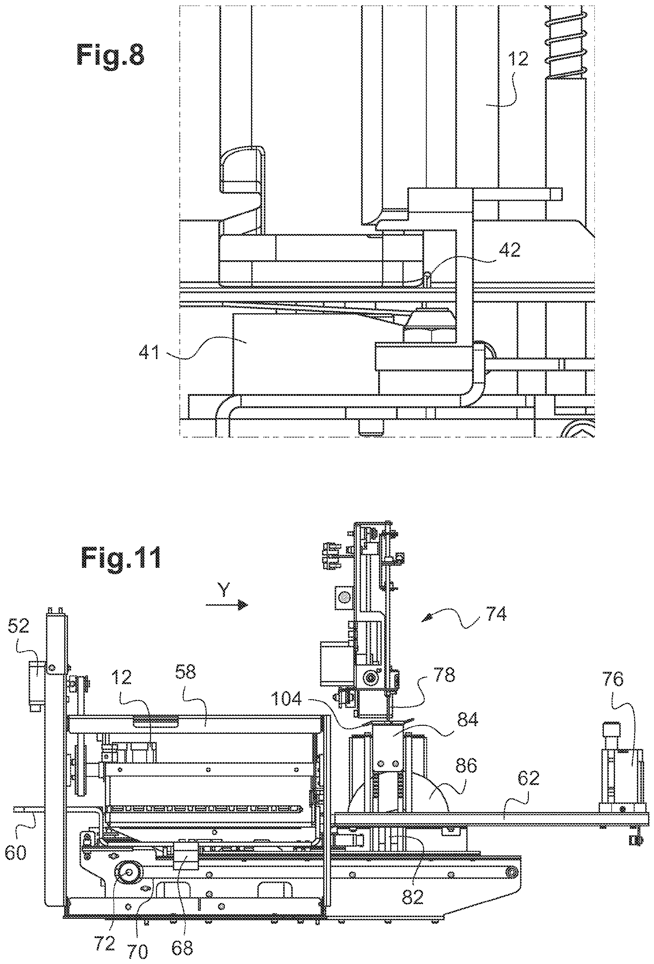

Lorsque l'agitation est terminée le portoir 12 est progressivement déplacé selon la direction Y par un guide 60 sur un rail 62. La figure 11 permet de mieux voir ce déplacement et la relation entre l'agitation et le prélèvement. Le guide 60 a une forme sensiblement en U avec deux bras 64 et 66 aux extrémités qui entourent le portoir 12, et comprend une liaison 68 à une courroie 70 entraînée par un moteur 72. Ainsi, lorsque le guide 60 est entraîné dans la direction Y, le bras 64 pousse le portoir vers la zone de prélèvement 74. Une fois que tous les tubes 14 ont été prélevés, le guide 60 est entraîné dans l'autre sens, et le bras 66 ramène le portoir 12 dans l'agitateur 26 en vue de son extraction du dispositif 2. Comme on peut le voir sur la droite de la figure 11, la partie gérant le tube urgent est représentée. Les tubes urgents introduits par la trappe 6 sont reçus dans un barillet 76 présentant un code barre associé au type du tube urgent. Pour prélever le tube urgent, le barillet 76 est amené dans la zone de prélèvement 74 par le guide 60 dont le bras 66 vient s'engager avec une partie du barillet 76. Dans l'exemple décrit ici, lorsque le dispositif 2 détecte qu'un tube urgent est introduit, il termine le cas échéant le prélèvement du tube 14 en cours pour un portoir 12 chargé, puis traite le tube urgent. Comme le dispositif 2 est agencé pour réaliser des cycles d'agitation / prélèvement tube par tube d'un portoir donné, l'introduction du tube urgent ne pose pas de problème. Les tubes urgents peuvent être introduits avec ou sans bouchon.

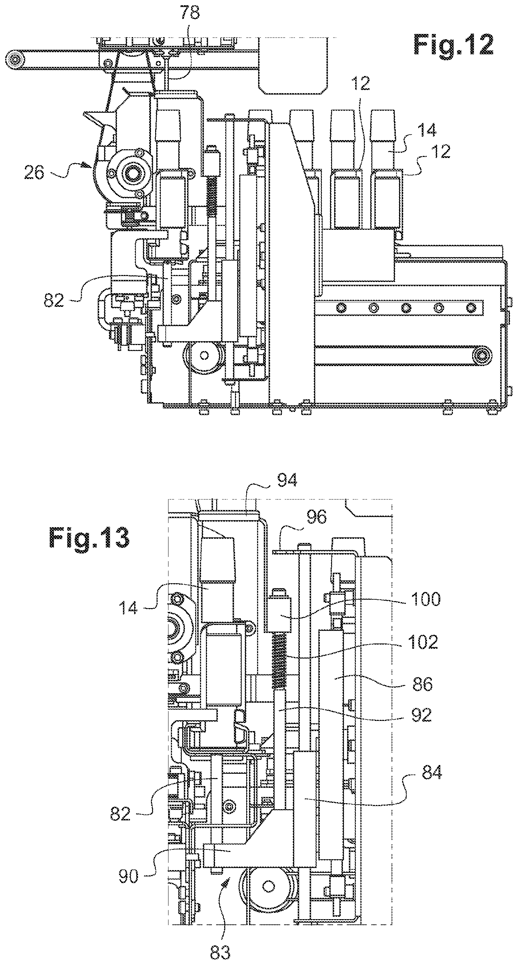

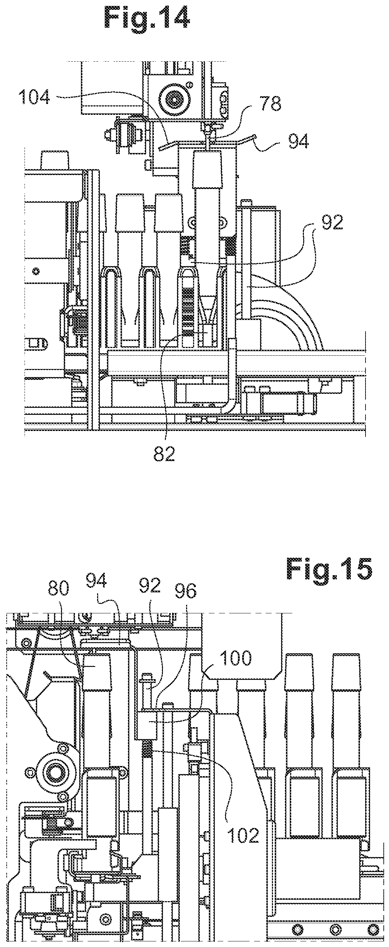

Le fonctionnement du prélèvement sera maintenant expliqué avec les figures 12 à 15. Contrairement à la plupart des dispositifs existants, le prélèvement dans le dispositif 2 selon l'invention est réalisé :
- avec les tubes tournés vers le haut, ce qui réduit le volume mort ainsi que les risques de fuites,
- avec un ensemble de prélèvement fixe comprenant un unique actionneur.

En effet, grâce à l'agencement du dispositif 2, il est possible de simplifier le prélèvement et de le rendre ainsi à la fois plus fiable et plus économique. Ainsi la zone de prélèvement comprend un perforateur 78 fixe et un aspirateur 80, et c'est le tube 14 qui est déplacé pour réaliser le prélèvement. Comme le portoir 12 est poussé par le bras 64, le positionnement de chaque tube 14 est connu et peut être disposé avec précision sous le perforateur 78. Ensuite, un poussoir 82 vient déplacer le tube 14 selon la direction Z afin de percer le bouchon du tube 14. Une fois que cela est réalisé, l'aspirateur 80 (ici une aiguille) se déplace à l'intérieur du perforateur 78 pour venir prélever le liquide biologique dans le tube 14. Enfin, un rappel 83 ramène le tube 14 dans le portoir 12 en même temps que le poussoir 82 se rétracte.

Dans l'exemple décrit ici, le poussoir 82 est un doigt qui passe à travers un évidement du rail 62 et une ouverture correspondante dans le fond du portoir 12. Le doigt 82 est solidaire d'une plaque 84 qui se déplace selon l'axe Z sous l'effet d'une came 86 mise en mouvement par un moteur 88. La liaison entre le doigt 82 et la plaque 84 est réalisée par une pièce 90 s'exprimant sensiblement selon la direction Z. La pièce 90 est également reliée au rappel 83 qui comprend deux tiges 92 et une extrémité 94 la plus proche du perforateur 78 qui a une forme sensiblement rectangulaire et s'exprime dans le plan (X ;Y) en surplombant en partie le bouchon d'un tube 14 percé par le perforateur 78. Ainsi, lorsque la pièce 90 est rappelée vers le bas par la plaque 84, l'extrémité 94 vient repousser le tube 14 dans le portoir 12.

L'extrémité 94 est montée avec un débattement sur pièce 90. Ainsi, l'extrémité 94 est reliée aux tiges 92 par un bloc 100 qui repose sur deux ressorts 102 qui ont chacun une liaison fixe avec une tige 92.Cette liaison à deux tiges garantit que l'extrémité 94 ne peut se déplacer que selon l'axe Z.

La pièce 90 est réglée de telle sorte que, dans un premier temps, l'extrémité 94 monte avec le doigt 82 et le tube 14 poussé par ce dernier. Lorsque l'extrémité 94 se rapproche de l'ensemble de prélèvement, le bloc 100 vient contre une butée 96. La tige 92 et le doigt 82 continuent alors de progresser selon l'axe Z, tandis que le ressort 102 se comprime contre le bloc 100. Une fois le prélèvement terminé, la pièce 90 redescend, et le ressort 102 se relâche avant que l'extrémité 94 vienne faire pression sur le bouchon du tube 14, le ramenant progressivement dans le portoir 12.

Cela apparaît plus clairement avec les figures 13 à 15, sur lesquelles on voit le doigt 82 et la pièce 90 qui se déplacent jusqu'au perçage du bouchon du tube 14 par le perforateur 78. Dans l'exemple représenté ici, le tube 14 est le plus petit type de tubes pouvant être reçu par le portoir 12. En conséquence, le ressort 102 est au maximum compression, le perforateur 78 pénètre moins profondément dans le tube 14 « plus éloigné » qu'avec un tube 14 plus grand. Le doigt 82 a un débattement plus important que l'extrémité 94, et le ressort 102 permet d'éviter que celle-ci interfère avec le perforateur 78. Ainsi, la fonction de prélèvement est réalisée avec un seul actionneur. Afin d'assurer que le tube 14 soit bien réintroduit dans le portoir 12 et ne bloque pas contre la partie 56 du couvercle 54 lorsque le guide 60 rappelle le portoir 12 dans le support 46 de l'agitateur 26, l'extrémité 94 définit un plan incliné 104 qui forcera le tube 14 dans le portoir 12 si nécessaire.

Une fois que le portoir 12 est en place, une nouvelle agitation est réalisée et le tube 14 suivant est prélevé de la même manière, et ainsi de suite jusqu'à ce que tous les tubes 14 aient fait l'objet d'un prélèvement. Le guide 60 rappelle alors le portoir 12 dans l'agitateur 26 pour procéder à son extraction, comme représenté avec les figures 16 à 19.

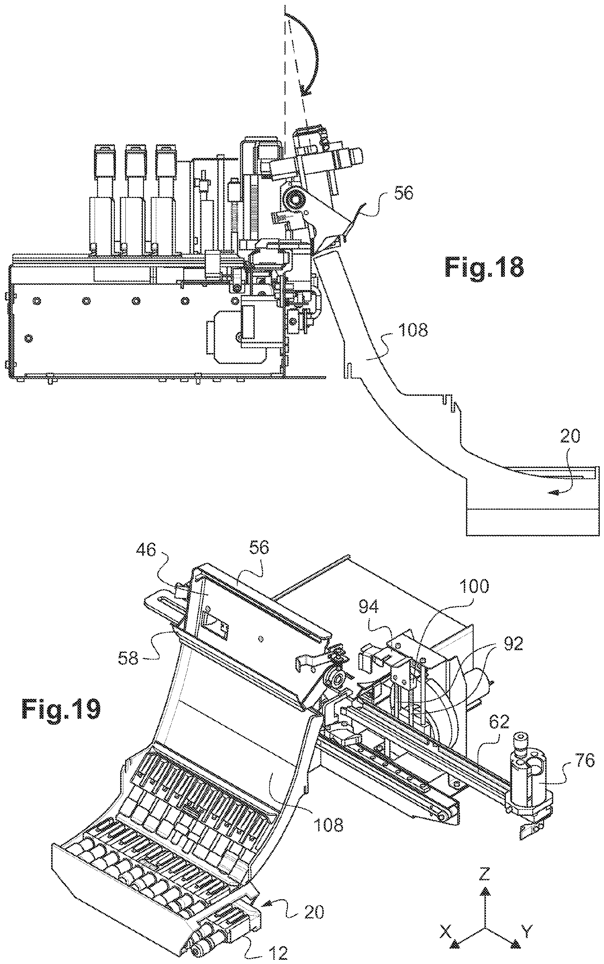

Pour cela, l'agitateur 26 va faire basculer le support 46 jusqu'à une position angulaire quasiment à 180° de la position d'introduction du portoir 12 dans l'agitateur 26. Lorsque le support 46 atteint une position angulaire d'environ 135° par rapport à la position angulaire d'introduction (figure 17), la portion 58 du couvercle 54 vient en butée contre le guide 60 et un ressort 106 commence à se comprimer, ce qui a pour effet que le couvercle 54 ne progresse plus en rotation, mais le support 46 continue de le faire. Au fur et à mesure que le support 46 continue d'augmenter l'angle de sa position par rapport à la position angulaire d'introduction, le portoir 12 se retrouve progressivement exposé entre la partie 56 et la partie 58 vers le bas, jusqu'à ce que la partie 56 ne le retienne plus du tout (figure 18). Le portoir 12 est alors déchargé de l'agitateur 26 par gravité.

Le portoir 12 tombe alors et glisse le long d'une pente 108 jusqu'à la sortie 20 (figure 19). Avantageusement, la portion de la pente 108 la reliant à la sortie 20 est inclinée selon la direction Z le long de la direction X, de sorte que le portoir 12 sera guidé vers la sortie 20 par gravité. Si plusieurs portoirs 12 sont extraits successivement, ils viennent se positionner les uns derrière les autres. Lorsque la sortie contient un décalage vertical en extrémité de la pente 108, par exemple au-dessus d'un bac de réception, les portoirs 12 peuvent s'empiler les uns sur les autres, de sorte que les tubes sont sensiblement à l'horizontale, par opposition à leur introduction sensiblement à l'horizontale sur l'agitateur 26.

En variante, le portoir 12 est déchargé directement dans un bac de récupération ou dans tout autre membre permettant de le récupérer par gravité.

L'invention concerne donc un dispositif de prélèvement d'échantillons de liquides biologiques propre à réaliser un prélèvement d'échantillon de liquides biologiques dans un tube, caractérisé en ce qu'il comprend un perforateur fixe propre à percer un bouchon d'un tube à prélever, un aspirateur propre à réaliser un prélèvement dans un tube percé par le perforateur à travers ce dernier, et un poussoir comprenant un unique actionneur et agencé pour pousser un tube en regard du perforateur contre ce dernier et pour le rappeler.

Ce dispositif peut présenter une ou plusieurs des caractéristiques suivantes :
- le poussoir est mis en déplacement par une pièce reliée à une plaque coulissant sur deux tiges et mue par une came entraînée par un moteur,
- le dispositif comprend un rappel comprenant une extrémité reliée à la pièce par un bloc relié à des ressorts, et
- le bloc est agencé pour venir contre une butée afin de bloquer le déplacement de l'extrémité alors que le poussoir continue de progresser.

## Revendications

1. Dispositif d'agitation et de prélèvement d'échantillons de liquides biologiques propre à réaliser un prélèvement d'échantillon de liquides biologiques dans un tube (14), comprenant un agitateur (26) propre à agiter un portoir (12) recevant un ou plusieurs tubes (14) en réalisant une succession de basculements entre deux positions d'agitation, **caractérisé en ce que** l'agitateur (26) comprend un support (46) ouvert, le dispositif comprenant en outre un couvercle (54) agencé pour prévenir la sortie du portoir (12) de l'agitateur (26) lors de son agitation, et monté à rotation sur l'agitateur (26) afin de libérer le portoir (12) à travers l'ouverture du support (46) lors d'un basculement au-delà de la position d'agitation éloignée de la position d'introduction du portoir (12), le couvercle (54) comprenant une portion (58) venant en butée contre l'agitateur (26) lorsque celui-ci atteint la position d'agitation la plus éloignée de la position d'introduction d'un portoir (12), et un ressort (106) agencé pour se comprimer lorsque l'agitateur (26) bascule au-delà de cette position, de sorte que le couvercle (54) ne prévient pas la sortie du portoir (12), et **en ce que** l'agitateur (26) est en outre agencé pour basculer au-delà de la position d'agitation la plus éloignée de la position d'introduction d'un portoir (12) pour le décharger par déplacement gravitaire.

2. Dispositif selon la revendication 1, comprenant en outre une pente (108) agencée pour recevoir un portoir (12) déchargé de l'agitateur (26) et pour le guider vers une sortie (20) du dispositif.

3. Dispositif selon la revendication 2, dans lequel la pente (108) comprend une inclinaison orientée vers la sortie (20), de manière à guider un portoir (12) déchargé hors du dispositif.

4. Dispositif selon l'une des revendications précédentes, dans lequel l'agitateur (26) réalise une succession de basculements entre deux positions d'agitation situées respectivement à 0° et à 120° par rapport à la position d'introduction du portoir (12) dans l'agitateur (26).

5. Dispositif selon l'une des revendications précédentes, comprenant en outre des butées (42) escamotables agencées pour empêcher un portoir (12) d'interférer avec l'agitateur (26) lorsque ce dernier reçoit déjà un portoir (12).

6. Dispositif selon l'une des revendications précédentes, comprenant en outre un perforateur (78) fixe propre à percer un bouchon d'un tube (14) à prélever, un aspirateur (80) propre à réaliser un prélèvement dans un tube (14) percé par le perforateur (78) à travers ce dernier, et un poussoir (82) comprenant un unique actionneur et agencé pour pousser un tube (14) en regard du perforateur (78) contre ce dernier et pour le rappeler.

7. Dispositif selon la revendication 6, dans lequel le poussoir (82) est mis en déplacement par une pièce (90) reliée à une plaque (84) mue par une came (86) entraînée par un moteur (88), et un rappel (83) comprenant une extrémité (94) reliée à la pièce (90) par un bloc (100) relié à des ressorts (102), et agencé pour venir contre une butée (96) afin de bloquer le déplacement de l'extrémité (94) alors que le poussoir (82) continue de progresser.

8. Procédé d'agitation et de prélèvement d'échantillons de liquides biologiques, comprenant les opérations suivantes :
- introduire un portoir (12) dans un agitateur (26) d'un dispositif selon l'une des revendications 1 à 7,
- mélanger le portoir (12) recevant un ou plusieurs tubes (14) en réalisant une succession de basculements entre deux positions d'agitation,
- prélever au moins un échantillon de liquides biologiques dans un des tubes (14) agités,
- basculer l'agitateur (26) au-delà de la position d'agitation la plus éloignée de la position d'introduction d'un portoir (12), et
- décharger le portoir (12) par déplacement gravitaire.

## Patentansprüche

1. Vorrichtung zum Schütteln und zur Entnahme von Proben von biologischen Flüssigkeiten, in der Lage, eine Entnahme von Proben von biologischen Flüssigkeiten in einem Röhrchen (14) durchzuführen, umfassend einen Schüttler (26), in der Lage, ein Gestell (12), ein oder mehrere Röhrchen (14) aufnehmend, zu schütteln durch das Durchführen einer Folge von Kippungen zwischen zwei Schüttelpositionen, **dadurch gekennzeichnet, dass** der Schüttler (26) eine offene Halterung (46) umfasst, wobei die Halterung weiter eine Abdeckung (54) umfasst, dafür ausgelegt, um den Austritt des Gestells (12) aus dem Schüttler (26) bei seiner Schüttlung zu verhindern, und rotierbar montiert auf dem Schüttler (26), um das Gestell (12) durch die Öffnung der Halterung (46) zu befreien bei einer Kippung über die von der Eingangsposition des Gestells (12) entfernten Schüttelposition hinaus, wobei die Abdeckung (54) einen Abschnitt (58) umfasst, an dem Schüttler (26) anliegend, wenn dieser die am weitesten von der Einführungsposition eines Gestells (12) entfernte Schüttelposition erreicht, und eine Feder (106), dafür ausgelegt, um sich zu komprimieren, wenn der Schüttler (26) über diese Position hinaus kippt, solcherart, dass die Abdeckung (54) nicht den Austritt des Gestells (12) verhindert, und dadurch, dass der Schüttler (26) weiter dafür ausgelegt ist, um über die am weitesten von der Einführungsposition eines Gestells (12) entfernte Schüttelposition hinauszukippen, um es durch Schwerkraftverlagerung zu lösen.

2. Vorrichtung nach Anspruch 1, weiter umfassend ein Gefälle (108), dafür ausgelegt, um ein aus dem Schüttler (26) entladenes Gestell (12) aufzunehmen und um es zu einem Ausgang (20) der Vorrichtung zu leiten.

3. Vorrichtung nach Anspruch 2, in welcher das Gefälle (108) eine Neigung umfasst, gerichtet zu dem Ausgang (20) hin, solcherart, dass es ein entladenes Gestell (12) aus der Vorrichtung hinaus leitet.

4. Vorrichtung nach einem der vorhergehenden Ansprüche, in welcher der Schüttler (26) eine Folge von Kippungen zwischen zwei Schüttelpositionen durchführt, jeweils positioniert bei 0° und bei 120° im Verhältnis zu der Einführungsposition des Gestells (12) in den Schüttler (26).

5. Vorrichtung nach einem der vorhergehenden Ansprüche, weiter umfassend versenkbare Anschläge (42), dafür ausgelegt, um ein Gestell (12) daran zu hindern, mit dem Schüttler (26) zu interferieren, wenn dieser bereits ein Gestell (12) aufnimmt.

6. Vorrichtung nach einem der vorhergehenden Ansprüche, weiter umfassend einen festen Perforator (78), in der Lage, einen Verschluss eines zu entnehmenden Röhrchens (14) zu durchdringen, einen Sauger (80), in der Lage, eine Entnahme in einem durch den Perforator (78) durchdrungenen Röhrchen (14) durchzuführen, und einen Stößel (82), umfassend ein einzelnes Stellglied und dafür ausgelegt, um ein Röhrchen (14) im Hinblick auf den Perforator (78) gegen diesen zu drücken, um es zurückzuholen.

7. Vorrichtung nach Anspruch 6, in welcher der Stößel (82) in Bewegung gesetzt wird durch ein Teil (90) verbunden mit einer Platte (84), bewegt durch einen Nocken (86), angetrieben durch einen Motor (88), und einen Rückholer (83), umfassend ein Ende (94) verbunden mit dem Teil (90) durch einen Block (100) verbunden mit Federn (102), und dafür ausgelegt, um an einem Anschlag (96) anzuliegen, um die Verlagerung des Endes (94) zu blockieren, während sich der Stößel (82) weiter fortbewegt.

8. Verfahren zum Schütteln und zur Entnahme von Proben von biologischen Flüssigkeiten, umfassend die folgenden Tätigkeiten:
- Einführen eines Gestells (12) in einen Agitator (26) einer Vorrichtung nach einem der Ansprüche 1 bis 7,
- Mischen des ein oder mehrere Röhrchen (14) aufnehmenden Gestells (12) durch das Durchführen einer Folge von Kippungen zwischen zwei Schüttelpositionen,
- Entnehmen von wenigstens einer Probe von biologischen Flüssigkeiten in einem der geschüttelten Röhrchen (14),
- Kippen des Schüttlers (26) über die am weitesten von der Einführungsposition eines Gestells (12) entfernte Schüttelposition hinaus, und
- Lösen des Gestells (12) durch Schwerkraftverlagerung.

## Claims

1. A shaking and sample-taking device for biological liquids that is designed to take samples of biological liquids in a tube (14), comprising a shaker (26) that is designed to mix a rack (12) holding one or more tubes (14) by performing a succession of tilting movements between two shaking positions, **characterized in that** the shaker (26) includes an open support (46), the device also having a cover (54) that is arranged such as to prevent the rack (12) from coming out of the shaker (26) during shaking thereof, and that is mounted rotatingly on the shaker (26) in order to release the rack (12) through the opening in the support (46) when same is tilted beyond the shaking position distant from the insertion position of the rack (12), the cover (54) comprising a portion (58) that butts against the shaker (26) when the shaker reaches the shaking position furthest away from the insertion position of a rack (12), and a spring (106) arranged to be compressed when the shaker (26) tilts beyond this position, such that the cover (54) does not prevent the rack (12) from coming out, and **in that** the shaker (26) is also arranged to tilt beyond the shaking position furthest from the insertion position of a rack (12) to discharge same by gravity.

2. The device according to claim 1, also including a slope (108) arranged to receive a rack (12) discharged from the shaker (26) and to guide same towards an outlet (20) of the device.

3. The device according to claim 2, in which the slope (108) has an incline oriented towards the outlet (20) such as to guide a rack (12) discharged from the device.

4. The device according to one of the preceding claims, in which the shaker (26) performs a succession of tilting movements between two shaking positions located respectively at 0° and 120° in relation to the insertion position of the rack (12) in the shaker (26).

5. The device according to one of the preceding claims, also including retractable stops (42) arranged such as to prevent a rack (12) from interfering with the shaker (26) when the latter is already holding a rack (12).

6. The device according to one of the preceding claims, also including a static perforator (78) that is designed to pierce a stopper of a tube (14) to be sampled, an aspirator (80) that is designed to take a sample from a tube (14) pierced by the perforator (78) through this latter, and a pusher (82) comprising a single actuator and designed to push a tube (14) in front of the perforator (78) against said perforator (78) and to bring same back.

7. The device according to claim 6, in which the pusher (82) is moved by a part (90) linked to a plate (84) driven by a cam (86) driven by a motor (88), and a return device (83) with one end (94) linked to the part (90) by a block (100) linked to springs (102) and arranged to butt against a stop (96) in order to prevent the end (94) from moving while the pusher (82) continues to move.

8. A shaking and sample-taking method for biological liquids including the following operations:
- inserting a rack (12) in a shaker (26) of a device according to one of claims 1 to 7,
- mixing the rack (12) holding one or more tubes (14) by performing a succession of tilting movements between two shaking positions,
- taking at least one sample of biological liquids from one of the tubes (14) shaken,
- tilting the shaker (26) beyond the shaking position furthest away from the insertion position of a rack (12), and
- discharging the rack (12) by gravity.
